# FASCICULE DE BREVET EUROPEEN

(11) **EP 1 161 343 B1**
(45) Date de publication et mention de la délivrance du brevet: **15.03.2006**
(21) Numéro de dépôt: 00910689.9
(22) Date de dépôt: 23.02.2000
(51) Int. Cl.: B32B 17/10, E06B 5/16, C09K 21/02, C01B 33/32, C03C 27/12

(54) **VITRAGE DE PROTECTION AU FEU**
BRANDSCHUTZVERGLASUNG
FIRE PROTECTION GLASS

(30) Priorité: 25.02.1999 DE 19908058
(43) Date de publication de la demande: 12.12.2001
(73) Titulaire: Vetrotech Saint-Gobain (International) AG, 3014 Bern (CH)
(72) Inventeur: FROMMELT, Simon, D-42781 Haan (DE); GELDERIE, Udo, D-52222 Stolberg (DE)
(74) Mandataire: Cardin, Elise
(86) Numéro de dépôt international: PCT/EP2000/001452
(87) Numéro de publication internationale: WO 2000/050235

(56) Documents cités:
- EP-A- 0 192 249
- EP-A- 0 524 418
- EP-A- 0 542 022
- WO-A-94/04355
- US-A- 4 444 825

## Description

La présente invention concerne un vitrage de protection au feu comportant au moins deux vitres, entre lesquelles une couche transparente faite d'un polysilicate alcalin hydraté est disposée.

Des vitrages anti-feu de ce type sont connus de par le document WO 94/04355. Dans ces vitrages anti-feu connus, le rapport SiO₂:M₂O (où M désigne le métal alcalin) du polysilicate alcalin vaut au moins 3:1 et la teneur en eau, de 25 à 60% en poids. Le polysilicate alcalin hydraté peut contenir un composé supplémentaire durcisseur pour lequel on utilise de préférence des acides inorganiques et organiques, des esters, des amides d'acide, du glyoxal, des carbonates d'alkylène et des hydrogénocarbonates d'alkylène, des borates, des phosphates et du paraformaldéhyde en quantités réduites habituellement inférieures à 5%. Ces durcisseurs supplémentaires sont destinés à accélérer le processus de durcissement après l'application ou le remplissage du mélange coulable et à augmenter la consistance de la couche durcie.

Ces compositions de polysilicate connues ont d'une certaine manière des propriétés thermoplastiques. Même lorsqu'elles sont munies d'un durcisseur supplémentaire, elles perdent la cohésion interne aux températures qui apparaissent en cas d'incendie et elles commencent à fluer. Vis-à-vis des surfaces des vitres au silicate, elles présentent d'autre part une bonne adhérence même à hautes températures. Si donc en cas d'incendie ou, selon le cas, en cas d'essai de réaction au feu, la vitre orientée du côté du feu se brise suite aux contraintes de traction se formant dans la zone de bord lors du dépassement d'un certain gradient thermique entre la surface de la vitre et le bord de la vitre encadré, des parties de la composition de polysilicate adhérant aux morceaux de verre sont entraînées avec les morceaux de verre tombant par terre, car les forces de cohésion à l'intérieur de la composition de polysilicate sont inférieures aux forces d'adhérence sur la surface du verre. L'action de protection du vitrage anti-feu en est dans son ensemble altérée.

Il est en outre connu de EP-A-0 705 685 un vitrage anti-feu avec lequel on souhaite réduire au minimum l'adjonction d'additifs choisis parmi des alcools polyfonctionnels ou des sucres, à la couche intermédiaire anti-feu constituée essentiellement de silicate de sodium et d'eau. Ces additifs de la famille des anti-gets sont présentés comme indispensables. Selon la publication mentionnée, la couche intermédiaire sensible au rayonnement UV se trouble à cause de l'apparition croissante de petites bulles fines et très fines. C'est pourquoi il est proposé de remplacer ce mélange en partie ou très largement par du silicate de potassium, sans toutefois pouvoir renoncer totalement aux additifs organiques. Au total, la couche intermédiaire doit renfermer moins de 6% en poids de substances organiques.

La viscosité de cette couche intermédiaire peut être obtenue en ajoutant des particules ou des mélanges de particules de taille submicroscopique choisies parmi « des composés inorganiques du Si, Al, Ti, Zr », qui peuvent être aussi sous forme de chélates.

Les vitrages anti-feu connus peuvent comporter encore d'autres vitres agencées avec un espaceur et des couches intermédiaires appropriées, où les couches intermédiaires sont toutefois encore essentiellement constituées de silicate de sodium.

Le but de l'invention est de perfectionner un vitrage anti-feu du type mentionné dans le préambule de sorte que les vitres ou, selon le cas, les morceaux de vitres ne se détachent pas de la couche intermédiaire de polysilicate, même en cas d'incendie, pour que le vitrage puisse conserver toute son efficacité de protection en cas d'incendie.

Suivant l'invention, ce but est atteint par le fait que des vitres feuilletées sont prévues sur chaque face de la couche anti-feu hydratée et que l'on se dispense totalement d'additifs organiques dans la couche intermédiaire.

On peut ainsi également renoncer totalement à des ajouts de durcisseurs et/ou chélates.

Des essais ont en effet permis de constater que des masses purement inorganiques, donc sans glycol ou substances organiques analogues ajoutés comme moyen anti-gel, présentent des durées de tenue en cas d'incendie considérablement meilleures. La masse moussante de couche intermédiaire reste blanche comme neige en cas d'incendie, grâce à quoi on établit une réflexion thermique élevée, et cette masse flue considérablement plus lentement ce qui a un effet positif en particulier pour des produits de classe F 90 et F 120.

Grâce à la substitution du glycol en tant que moyen anti-get par des sels inorganiques (notamment sels de métaux, en particulier alcalins, par exemple acétate de potassium), le cas échéant grâce à l'abandon total de moyen anti-gel, on peut rendre la masse de la couche intermédiaire plus dure, c'est-à-dire moins susceptible de fluer et réfléchissant mieux la chaleur en cas d'incendie - parce que parfaitement blanche. Lorsqu'un anti-gel inorganique est présent, il est efficace en faible quantité, par exemple inférieure à 5% en poids de la masse de la couche intermédiaire, notamment inférieure à 4%, par exemple de l'ordre de 0,5 à 3%, en particulier 1 à 2% en poids.

Un assemblage de deux vitres feuilletées avec une couche intermédiaire épaisse de 1,5 à 12 mm faite d'une masse de remplissage purement inorganique de silicate de potassium est particulièrement avantageuse.

On remarque que la couche intermédiaire purement inorganique selon l'invention pourrait certes théoriquement être combinée aussi avec des feuilles de verre monolithique, mais que des éclats de verre pourraient alors se détacher en cas d'incendie.

Dans une forme de réalisation particulièrement appropriée de l'invention, les vitres en verre feuilleté sont constituées de deux feuilles de verre flotté d'au moins 1 mm d'épaisseur chacune, avantageusement de 1 à 4 mm, en particulier d'au moins 2 mm d'épaisseur chacune. Elles sont reliées l'une à l'autre par un film thermoplastique de poly(butyral de vinyle) (PVB), de tétrafluoro-éthylène/hexafluoropropyléne/fluorure de vinylidène (THV) ou d'éthyLène/acétate de vinyle (EVA). Dans cette forme de réalisation, les hautes contraintes de traction provoquées par les gradients thermiques se produisent Lors de l'essai de réaction au feu sur le côté exposé au feu dans la feuille de verre flotté orientée vers le feu de la vitre feuilletée, de sorte que cette feuille se brise. Les contraintes qui se produisent dans cette feuille de verre ne sont pas transmises sur l'autre feuille de verre de la vitre feuilletée, car elles sont captées par le film intermédiaire thermoplastique qui se ramollit. Pour cette raison, L'autre feuille de verre flotté reliée à la composition de polysilicate ne se brise par contre généralement pas. Dans tous les cas elle reste, même Lorsqu'elle se brise, pendant la poursuite de l'essai de réaction au feu, reliée à la composition de polysilicate et contribue encore de cette manière à la réalisation de la fonction de protection contre le feu.

Bien entendu, la constitution des vitres feuilletées n'est pas limitée aux formes de réalisation préférées ; on peut employer en particulier des feuilletés constitués de plus de deux feuilles rigides avec les intercalaires correspondants. On peut aussi faire varier l'épaisseur des feuilles de verre individuelles selon les besoins.

La composition de polysilicate alcalin suivant l'invention peut être coulée entre des vitres en une couche relativement épaisse de, par exempte, 4 à 12 mm d'épaisseur qui sont maintenues à distance sur le bord par des cadres d'entretoisement d'épaisseur correspondante. Il est cependant aussi bien possible d'appliquer la composition de polysilicate sur des vitres feuilletées en couches minces d'environ 0,5 à 5 mm, notamment de 1 à 2 mm d'épaisseur et de relier entre elles plusieurs vitres enduites de cette manière en un verre anti-feu multicouche. Suivant cette réalisation, les vitres feuilletées peuvent avoir une épaisseur d'au moins 2,5 à 10 mm d'épaisseur chacune. Avantageusement, le vitrage anti-feu comprend au moins trois vitres feuilletées entre lesquelles des couches minces de polysilicate alcalin sont disposées. Les vitres feuilletées sont généralement non trempées mais peuvent, selon les besoins, renfermer une feuille de verre trempée, ou les deux. Comme les couches de polysilicate sont relativement dures, des verres anti-feu de ce type peuvent par conséquent être fabriqués en unités de grande dimension et, suivant les demandes, être sciés en unités de dimension plus petite, comme un vitrage feuilleté normal.

Par rapport à des vitrages de protection contre le feu traditionnels avec des feuilles de verre monolithiques, on améliore aussi l'isolation phonique en utilisant deux vitres feuilletées.

La suite décrit plus en détail un verre anti-feu suivant l'état de la technique (exemple comparatif) et deux exemples de réalisation de verres anti-feu suivant l'invention.

### EXEMPLE COMPARATIF

On fabrique un verre anti-feu aux dimensions de 200 cm x 120 cm fait de deux vitres en verre feuilleté et d'une couche intermédiaire de polysilicate alcalin hydraté de 6 mm d'épaisseur disposée entre ces vitres en verre feuilleté. Les vitres en verre feuilleté sont constituées chacune de deux feuilles de verre flotté de 2 mm d'épaisseur chacune qui sont reliées l'une à l'autre par un film de 0,3 mm d'épaisseur d'EVA autoréticulant. Les deux vitres en verre feuilleté sont réunies en un double vitrage par intercalage d'un cadre d'entretoisement fait d'un ruban profilé en caoutchouc de silicone et sont rendues étanches sur le bord avec une composition adhésive d'étanchéité, par exemple de polysulfure, un orifice de remplissage et un orifice du purge d'air étant prévus pour le remplissage du double vitrage.

La cavité intérieure du double vitrage est remplie avec une composition coulable constituée d'une solution aqueuse de silicate de potassium et d'une dispersion aqueuse de silice colloïdale. Le rapport de SiO₂:K₂O de la composition coulable vaut 4,7:1. La composition renferme du glycol à raison d'environ 4,5% en poids de cette masse. On laisse durcir la composition coulée à une température de 80°C.

Pour déterminer le degré de réticulation de la composition durcie, on mesure la vitesse de pénétration d'une bille en acier de 10 mm de diamètre chargée d'un poids de 1 kg sur un échantillon préparé à partir de la même composition de coulage et durci dans les mêmes conditions, pendant qu'on mesure la distance dont la bille a pénétré dans la composition dans un intervalle de temps de 10 minutes. Pour cette composition de polysilicate, la profondeur de pénétration s'élève à 9 mm.

On effectue sur les verres anti-feu des essais de tenue au feu suivant la norme DIN 4102 ou, selon le cas, ISO/DIS 834-1 d'après ce qu'on appelle la courbe standard de température. Trois minutes après le commencement de l'essai de tenue au feu, la feuille de verre flotté extérieure de la vitre feuilletée orientée vers l'espace du foyer éclate. Six minutes après le commencement de l'essai de tenue au feu, la feuille de verre flotté de cette vitre feuilletée qui adhère à la composition de polysilicate éclate. Peu de temps après, les premiers morceaux de verre de la feuille de verre flotté brisée se détachent et tombent dans l'espace du foyer. Les conditions de la classe de résistance au feu F30 ne sont pas remplies.

### EXEMPLE DE REALISATION 1

On fabrique des verres anti-feu comme décrit dans l'exemple comparatif, à la différence qu'on n'ajoute pas de glycol comme agent anti-gel au mélange coulable de silicate de potassium aqueux et de dispersion aqueuse d'acide silicique colloïdal ayant le même rapport SiO₂:K₂O que dans l'exemple comparatif. Le durcissement de la composition de coulage s'effectue comme pour l'exemple comparatif à 80°C.

On détermine le degré de réticulation suivant la méthode décrite dans l'exemple comparatif sur un échantillon préparé à partir de la même composition de coulage et durci dans les mêmes conditions. La mesure révèle une profondeur de pénétration de la bille chargée de poids sur 3 mm, c'est-à-dire que la solidité interne ou la réticulation du polysilicate durci est environ trois fois supérieure que pour le polysilicate de l'exemple comparatif.

Lors d'un essai de tenue au feu effectué sur ces verres anti-feu, la feuille de verre flotté extérieure de la vitre feuilletée qui est orientée vers l'espace du foyer éclate également après quelques minutes. Peu de temps après, la feuille de verre flotté de cette vitre feuilletée qui adhère à la composition de polysilicate éclate également. Les éclats de cette feuille de verre ne tombent cependant pas, mais adhèrent toujours à la couche de polysilicate et forment avec celle-ci une unité rigide. La masse de polysilicate qui se transforme en mousse reste ici parfaitement blanche. Le poids de la feuille de verre qui y adhère encore ne suffit pas pour faire fluer la masse maintenant plus dure.

L'essai de tenue au feu est interrompu après 45 minutes et, immédiatement après l'extinction des brûleurs, on effectue le " test de l'eau d'extinction ", dans lequel on dirige un jet d'eau fort de l'extérieur sur le verre anti-feu. La vitre feuilletée tournée vers le foyer est certes partiellement cassée, mais le verre tient cependant ensemble du fait du film encore intact. La feuille de verre tournée vers le foyer adhère encore à la masse de polysilicate.

Les morceaux de verre adhérents ont protègé la couche de polysilicate de l'attaque du jet d'eau. La plaque de polysilicate parfaitement blanche rigidifiée et protégée par les morceaux de verre adhérant des deux côtés comme auparavant n'est pas détruite par le jet d'eau, de sorte que ce vitrage anti-feu suivant l'invention remplit d'une part les conditions de la classe de résistance au feu F30 et résiste d'autre part également au « test de l'eau d'extinction ».

### EXEMPLE DE REALISATION 2

On fabrique à nouveau des verres anti-feu du type décrit dans l'exemple comparatif, avec cependant comme différence qu'on utilise comme silicate alcalin un mélange de 85% en poids de silicate de potassium et de 15% en poids de silicate de lithium, qui est mis à réagir dans de l'eau avec une dispersion d'acide silicique à 30% dans un rapport de quantité tel que le polysilicate de K-Li qui en résulte présente un rapport molaire de SiO₂:(K₂O+Li₂O)=5,0:1. A cette composition de coulage sont ajoutés 2% en poids d'acétate de potassium comme anti-get inorganique. La masse est ensuite transformée en un verre anti-feu comme à l'exemple comparatif. L'épaisseur de la couche intermédiaire se monte toutefois à 12 mm. Le durcissement de la composition s'effectue comme pour l'exemple comparatif, à 80°C. A la suite du durcissement, on découpe du plateau ainsi obtenu une éprouvette pour four de 200 cm x 120 cm dont on scelle le bord avec un polysulfure.

Des mesures de la vitesse de pénétration d'une bille chargée de poids sur un échantillon de ce polysilicate suivant le procédé décrit dans l'exemple comparatif révèlent une profondeur de pénétration de 5 mm. Le durcissement ou, selon le cas, le degré de réticulation de ce polysilicate est dès lors environ supérieur d'un facteur 2 à l'échantillon de l'exemple comparatif.

Les essais de tenue au feu réalisés sur ces verres anti-feu et les « tests de l'eau d'extinction » ne montrent aucune sorte de fluage de la masse de la couche intermédiaire dans l'espace du foyer même après une durée d'exposition de plus de 60 minutes, c'est-à-dire que ces verres anti-feu remplissent également les conditions de la classe de résistance au feu F 60 et résistent en outre au test de l'eau d'extinction.

## Revendications

1. Vitrage anti-feu comportant au moins deux vitres, entre lesquelles une couche transparente faite d'un polysilicate alcalin hydraté est disposée, **caractérisé en ce qu'**au moins une vitre feuilletée, constituée d'au moins deux feuilles de verre et d'un film intercalaire thermoplastique reliant ces deux feuilles, est disposée de chaque côté de la couche de polysilicate transparent, et **en ce que** la couche de polysilicate ne contient aucun anti-gel organique.

2. Vitrage anti-feu suivant la revendication 1, **caractérisé en ce que** la couche de polysilicate alcalin présente une épaisseur de 1,5 à 12 mm

3. Vitrage anti-feu selon la revendication 1 ou 2, **caractérisé en ce que** les vitres feuilletées sont chacune constituées de deux feuilles de verre flotté de 1 à 4 mm d'épaisseur chacune reliées l'une à l'autre par des couches intermédiaires de poly(butyral de vinyle), de tétrafluoro-éthylènelhexafluoro-propylène/ fluorure de vinylidène ou d'éthytène/acétate de vinyle.

4. Vitrage anti-feu suivant l'une des revendications 1 à 3, **caractérisé en ce qu'**il comprend au moins trois vitres feuilletées de 2,5 à 10 mm d'épaisseur chacune, entre lesquelles une couche du polysilicate alcalin de 0,5 à 5 mm d'épaisseur est chaque fois disposée.

5. Vitrage anti-feu suivant l'une quelconque des revendications précédentes, **caractérisé en ce que** la couche intermédiaire contient un anti-gel inorganique, en particulier un sel métallique.

6. Vitrage anti-feu suivant la revendication 5, **caractérisé en ce que** l'anti-gel inorganique est présent en quantité inférieure à 5% en poids de la couche intermédiaire.

7. Vitrage anti-feu suivant la revendication 5, **caractérisé en ce qu'**un sel alcalin, comme l'acétate de potassium, est utilisé comme anti-gel inorganique.

## Patentansprüche

1. Brandschutzverglasung mit wenigstens zwei Glasscheiben, zwischen denen eine transparente Schicht aus einem wasserhaltigen Alkali-Polysilikat angeordnet ist, **dadurch gekennzeichnet, dass** auf beiden Seiten der transparenten Polysilikatschicht mindestens eine Verbundglasscheibe aus mindestens zwei Glasscheiben und einer diese verbindenden Klebeschicht vorgesehen ist, und dass die Polysilikatschicht keinen organischen Frostschutz enthält.

2. Brandschutzverglasung nach Anspruch 1, **dadurch gekennzeichnet, dass** die Alkali-Polysilikatschicht eine Dicke von 1,5 bis 12 mm aufweist.

3. Brandschutzverglasung nach Anspruch 1 oder 2, **dadurch gekennzeichnet, dass** die Verbundglasscheiben jeweils aus zwei jeweils 1 bis 4 mm dicken, über Zwischenschichten aus Poly-(-vinyl oder -butyral), Tetrafluorethylen-/Hexafluoropropylen-/Vinylidenfluorid oder Ethylenvinylacetat miteinander verbundenen Floatglasscheiben bestehen.

4. Brandschutzverglasung nach einem der Ansprüche 1 bis 3, **dadurch gekennzeichnet, dass** es wenigstens drei jeweils 2,5 bis 10 mm dicke Verbundglasscheiben umfasst, zwischen denen jeweils eine 0,5 bis 5 mm dicke Schicht des Alkali-Polysilikats angeordnet ist.

5. Brandschutzverglasung nach einem der vorstehenden Ansprüche, **dadurch gekennzeichnet, dass** die Zwischenschicht einen anorganischen Frostschutz, insbesondere ein Metallsalz, enthält.

6. Brändschutzverglasung nach Anspruch 5, **dadurch gekennzeichnet, dass** der anorganische Frostschutz mit einer Menge von weniger als 5 Gew.-% in der Zwischenschicht enthalten ist.

7. Brandschutzverglasung nach Anspruch 5, **dadurch gekennzeichnet, dass** ein Alkalisalz wie Kaliumacetat als anorganischer Frostschutz verwendet wird.

## Claims

1. Fire-resistant glazing assembly comprising at least two panes between which a transparent layer made of a hydrated alkali polysilicate is placed, **characterized in that** at least one laminated pane, consisting of at least two glass sheets and a thermoplastic film interlayer joining these two sheets together, is placed on each side of the transparent polysilicate layer, and **in that** the polysilicate layer contains no organic antifreeze.

2. Fire-resistant glazing assembly according to Claim 1, **characterized in that** the alkali polysilicate layer has a thickness of 1.5 to 12 mm.

3. Fire-resistant glazing assembly according to Claim 1 or 2, **characterized in that** the laminated panes each consist of two sheets of float glass 1 to4 mm in thickness, which are each joined together by interlayers of polyvinyl butyral, of tetrafluoroethylene/hexafluoro-propylene/vinylidene fluoride or of ethylene/vinyl acetate.

4. Fire-resistant glazing assembly according to one of Claims 1 to 3, **characterized in that** it comprises at least three laminated panes each 2.5 to 10 mm in thickness, between which a layer of the alkali polysilicate 0.5 to 5 mm in thickness is placed each time.

5. Fire-resistant glazing assembly according to any one of the preceding claims, **characterized in that** the interlayer contains an inorganic antifreeze, particularly a metal salt.

6. Fire-resistant glazing assembly according to Claim 5, **characterized in that** the inorganic antifreeze is present in an amount inferior to 5 percent by weight of the interlayer.

7. Fire-resistant glazing assembly according to Claim 5, **characterized in that** an alkali salt, such as potassium acetate, is used as inorganic antifreeze.
